# EUROPEAN PATENT SPECIFICATION

(11) **EP 3 901 505 B1**
(45) Date of publication and mention of the grant of the patent: **12.11.2025**
(21) Application number: 20171434.2
(22) Date of filing: 24.04.2020
(51) Int. Cl.: F16L 23/028, F16L 23/18, F16L 41/00, F16L 41/08, F16L 58/18, F28F 9/02, F28F 19/00, F28D 1/04, F28F 13/12, F28D 21/00

(54) **PIPE CONNECTION ARRANGEMENT FOR A HEAT EXCHANGER**
ROHRVERBINDUNGSANORDNUNG FÜR EINEN WÄRMETAUSCHER
AGENCEMENT DE RACCORDEMENT DE TUYAU POUR UN ÉCHANGEUR DE CHALEUR

(43) Date of publication of application: 27.10.2021
(73) Proprietor: Carrier Corporation, Palm Beach Gardens, FL 33418 (US)
(72) Inventor: CHANON, Jean-Pierre, 01120 Montluel (FR); NADIN, Renaud, 67140 Barr (FR); WALLET-LAILY, Jérémy, 01120 Montluel (FR); ROUSVILLE, Brice, 01120 Montluel (FR)
(74) Representative: Dehns

(56) References cited:
- EP-A1- 3 561 239
- EP-A1- 3 670 990
- EP-A2- 1 843 072
- EP-A2- 2 365 260
- WO-A1-2009/070162

## Description

The present disclosure relates generally to the field of heat exchangers. In particular, the disclosure relates to a heat exchanger comprising a pipe connection arrangement and a method of connecting a pipe to a heat exchanger.

Heat exchangers, in particular Micro Channel Heat Exchangers (MCHE), such as those used in air-cooled chillers, rely on the supply of refrigerant via a refrigerant pipe connected to the heat exchanger. Such a refrigerant pipe is typically made from copper. Conventionally, a refrigerant pipe is connected to a heat exchanger using a block fitting arrangement comprising an aluminium seal washer block heat exchanger fitting (referred to more generally as a block fitting) and a steel flange. Such a conventional pipe connection arrangement is described in more detail later with reference to Figure 1. A conventional arrangement is also discussed in WO 2009/070162. Document EP2365260A2 relates to a multi-port device of the prior art.

However, such pipe connections are susceptible to galvanic corrosion for various reasons. Firstly, a recessed area in the block fitting (also known as a spotfacing) in which a seal and a collar of the refrigerant pipe are located causes water retention, which leads to galvanic corrosion between the aluminium block fitting, steel flange and copper pipe due in particular to the high potential between the aluminium and copper. Additionally, the seal has a metallic (typically steel) part which is in contact with the collar of the copper refrigerant pipe and aluminium block fitting, thus providing electrical connection therebetween. Moreover, the collar of the pipe is in direct contact with the steel flange and the aluminium block fitting is in direct contact with the steel flange. These electrical connections result in further galvanic corrosion between the copper pipe and the aluminium block fitting, and between the steel flange and the aluminium block fitting. The galvanic corrosion causes damage to the pipe connection arrangement leading to refrigerant leaks. Moreover, the block fitting becomes unsightly.

The present inventors have recognised that there is a need to reduce galvanic corrosion in pipe connection arrangements for heat exchangers.

EP 1843072 A2 discloses a pipe connecting structure including a male flange block combined with a first pipe, a female flange block combined with a second pipe, and a sealing member.

According to a first aspect, the present invention provides a heat exchanger comprising a pipe connection arrangement and a pipe connected by the pipe connection arrangement; wherein the pipe connection arrangement comprises: a metallic block fitting; a flange coupled to the block fitting; and a seal; wherein the block fitting comprises a bore extending therethrough for receiving the pipe; the flange comprises a bore extending therethrough for receiving the pipe; the pipe extends through the bore of the flange and into the bore of the block fitting, and the bore of the block fitting is fluidically connected with an opening of the heat exchanger, such that fluid may pass through the pipe into or out of the heat exchanger; the block fitting comprises a surface that faces the flange, the surface comprising a plateau portion surrounding the bore and extending towards the flange; the pipe comprises an annular collar; and the seal is located between the plateau portion and the annular collar of the pipe, wherein one side of the seal abuts the plateau portion and another side of the seal abuts the annular collar.

The seal may be considered as being located or seated on the plateau portion and/or as being located adjacent to the collar.

It will be appreciated that since a surface of the block fitting faces the flange, it may also be considered that this surface of the block fitting is opposed to the flange. The flange may have a surface and the said surface of the block fitting may face, in other words be opposed to, this surface of the flange. The surface of the block fitting that faces the flange may abut the flange, or it may be spaced apart therefrom.

Typically, the block fitting comprises aluminium, but may also comprise magnesium, bronze, titanium or alloys thereof. The flange is typically a metallic flange and may comprise steel or stainless steel. Alternatively, the flange may comprise a plastic composite. The pipe connected by the pipe connection arrangement may typically be a copper pipe or a steel pipe.

The flange provides a means to secure the pipe that is inserted in the bore of the block fitting. The collar of the pipe is sandwiched between (i.e. located between) the block fitting and the flange, and thus the flange prevents the pipe from slipping out of position. The flange will generally abut the collar when coupled to the block fitting.

Since the seal abuts the plateau portion of the surface of the block fitting (and thus may be considered as being located or seated on the plateau portion), the seal is not placed on the lowest part of a recessed area (i.e. spot facing) as in the prior art.

Since the surface of the block fitting comprises the plateau portion, the plateau portion is therefore part of the block fitting that projects outwards from a main body of the block fitting. The plateau portion may extend in an axial direction of the bore. The height of the plateau portion may be a height relative to an area of the block fitting from which the plateau portion projects. For example, the height relative to the surrounding surface of the block fitting. The plateau portion may have a height up to about 20mm. Or, the plateau portion may have a height up to about 8mm. It will be appreciated that the plateau portion height is greater than zero. For example, the plateau portion may have a height greater than zero but less than or equal to 8mm. In another example the plateau portion may have a height greater than zero but less than or equal to 20mm.

The plateau portion may be understood as being "embossed" on the surface of the block fitting. The plateau portion will typically be formed as part of the block fitting, i.e. it may be continuous with the block fitting and formed of the same material.

The plateau portion may have an annular shape surrounding the bore of the block fitting. The plateau portion may have approximately the same diameter or other dimensions as the seal.

In some examples the surface of the block fitting that faces the flange may be stepped. In other words, the surface may be understood as comprising at least one step, or as having a stepped shape. The stepped surface may comprise at least one upper portion and at least one lower portion in addition to the plateau portion. The upper portion may be the portion of the surface that is closer to the flange than the lower portion. The lower portion may be the portion of the surface that is further away from the flange than the upper portion. The plateau portion may project from the lower portion of the surface. The lower portion may be flat or substantially flat except for the plateau portion that extends therefrom.

A depth of the step may be understood to be the distance between the upper portion and the lower portion of the surface. The step may have a depth within a range of about 0 to about 20mm, for example within a range of 0 to 20mm. The depth may be within a range of about 0 to about 8mm, for example within a range of 0 to 8mm. The height of the plateau portion may be a height relative to the lower portion of the surface. The plateau portion may have a height that is equal to or less than the depth of the step. The surface may comprise two upper portions and one lower portion located between the upper portions. The lower portion may be joined to each upper portion by a step. The surface of a stepped block fitting may be flat or substantially flat except for the step and the plateau portion.

Although water may accumulate in the lower portion of the surface, because the seal is located on the plateau portion that projects from the lower portion of the surface, the seal is located away from water that may have accumulated at the lowest point of the lower portion. Additionally, the collar of the pipe that abuts the seal is caused to be located further away from the retained water due to the plateau portion. Thus, galvanic corrosion is reduced and the damage resulting from such corrosion is reduced.

In other examples the surface of the block fitting may be flat or substantially flat except for the plateau portion, i.e. the spotfacing/recessed area of the prior art may be omitted. Consequently, water retention in the recessed area as occurs in the prior art is avoided. Thus, galvanic corrosion is reduced and the damage resulting from such corrosion is reduced.

The seal may generally be an annular seal. The seal is located between the block fitting and the flange. The seal may alternatively be termed a gasket. The seal is for sealing around the pipe connected by the pipe connection arrangement in order to prevent fluid leaking out of the block fitting.

The seal may comprise a metallic ring, for example steel. The metallic ring may be fully encapsulated within, i.e. overmoulded with, a material such as an electrically insulating material. The metallic part of the seal is therefore prevented from contacting the metallic block fitting, the flange, or the pipe connected by the arrangement. As a result, galvanic corrosion is further reduced. This effect is particularly significant if the material is electrically insulating since the metallic part of the seal is then electrically insulated from the aluminium block fitting, thus reducing or avoiding galvanic corrosion between the two. Moreover, since in use the seal is disposed between the collar of the pipe being connected and the block fitting, the electrical insulation provided by the seal then also reduces galvanic corrosion between the collar and the block fitting.

Furthermore, since by encapsulating the metallic ring within a material such as an electrically insulating material, the thickness and diameter of the seal is increased beyond that of a seal with no encapsulation, the distance between the flange and the block fitting is increased and the distance between the collar of a pipe being connected and the block fitting is increased. This increase in distance (i.e. separation of these components) further reduces galvanic corrosion. Regarding the increase in distance between the collar and the block fitting, this is not just the direct distance between these elements (increased as a result of the thickness of the encapsulation above and below the metallic ring). This is also an increase in the gap between the edge of the collar and the block fitting, i.e. the open pathway between the two, as a result of the encapsulation at the outer annular rim of the metallic ring.

Optionally, the seal may comprise an annular rim of material, such as electrically insulating material, radially outward of the metallic ring. The annular rim may be in addition to the encapsulation. Or, the annular rim may be a part of the encapsulation of the metallic ring within the material, e.g. electrically insulating material. It will be appreciated that by encapsulating the metallic ring within material, e.g. electrically insulating material, this inherently therefore comprises an annular rim of said material radially outward of the metallic ring.

Alternatively, the annular rim may replace the encapsulation, in other words, the metallic ring is not fully encapsulated in a material such as an electrically insulating material; rather, an annular rim of material such as electrically insulating material is provided radially outward of the metallic ring. In addition, an annular rim of material such as electrically insulating material may be provided radially inward of the metallic ring.

Due to the annular rim, the diameter of the seal is increased when compared with prior art seals comprising only metallic rings. Due to this increase in diameter, the distance in terms of the gap between the collar of the pipe being connected and the block fitting, i.e. the open pathway between the two, is increased, thereby further reducing galvanic corrosion. The difference between the outer diameter and inner diameter of the annular rim may be in the range of 2.0mm to 10.0mm. The difference may be 4.5mm.

In addition to or as an alternative to being electrically insulating, the material of the annular rim and/or the encapsulation may be a non-metallic material. In addition to or as an alternative to being electrically insulating and/or metallic, the material may be a flexible material. Typically, it may comprise an elastic material such as an elastic polymer (elastomer) or a rubber material. Examples of suitable materials include natural or synthetic rubber, such as EPDM.

The seal may have an outer diameter (including any annular rim and/or encapsulation) in the range of 10.0mm to 50.0mm. The seal may have a thickness (including any encapsulation) in the range of 1.0mm to 5.0mm. In one example, the outer diameter is 30mm and the thickness is 1.7mm. In another example, the outer diameter is 35mm and the thickness is 1.97mm. The outer diameter may be at least 30 mm.

For example, the metallic ring may have an outer diameter of 25.5mm and an inner diameter of 21mm and the annular rim (which may be part of a full encapsulation) may have an outer diameter of 30mm and an inner diameter of 25.5mm. Therefore, when the annular rim is added to the metallic ring, the seal may have an outer diameter of 30mm and an inner diameter of 21mm. It will be appreciated that if the metallic ring is fully encapsulated in a material such as an electrically insulating material then the inner diameter of the seal will be smaller than the inner diameter of the metallic ring due to the presence of electrically insulating material at the inner circumference of the metallic ring and the thickness of the seal will be greater than the thickness of the metallic ring due to the presence of electrically insulating material at the top and bottom of the metallic ring.

The pipe connection arrangement may further comprise at least one fastener coupling the flange to the block fitting. The fastener may comprise a bolt, typically a steel or stainless steel bolt, and the block fitting may comprise a hole for receiving the bolt. In examples where the surface of the block fitting is stepped, the hole may extend into the upper portion of the surface. The bolt may comprise an external screw thread, and the hole may comprise an internal screw thread corresponding to the screw thread of the bolt such that the bolt can be screwed therein. The bolt may be a stud bolt. The bolt may be configured to receive a nut on one end of the bolt. The fastener may comprise the combination of a bolt and a nut.

The flange may comprise a hole for receiving the fastener, e.g. a bolt, which may be an unthreaded hole. The hole of the flange and/or the block fitting may be tapered at the opening(s) thereof which may aid insertion of the fastener into the hole. The tapered opening of the hole of the flange and/or the block fitting may be a countersink. In embodiments where the surface of the block fitting is substantially flat except for the plateau portion, the meaning of "substantially flat" is intended to include a surface comprising tapered portions at the openings of one or more holes for receiving the bolt(s). In other words, the surface is flat except for the tapering at the opening(s) and the plateau portion. Such tapering has a minimal overall impact on the shape of the surface and hence can be considered as falling within the meaning of "substantially flat". Similarly, in embodiments where the surface of the block fitting comprises a stepped portion and a plateau portion but is otherwise substantially flat, the meaning of "substantially flat" is intended to include a surface comprising tapered portions at the openings of one or more holes for receiving the fastener(s). Again, such tapering has a minimal overall impact on the shape of the surface and thus can be considered as falling within the meaning of "substantially flat". It may also be considered as falling within the scope of the meaning of "flat".

In another embodiment, the bolt may be replaced with a screw.

Typically, two fasteners are provided for a single block fitting. The fasteners may be arranged on opposite sides of the bore.

The arrangement comprises a pipe extending through the bore of the flange and into the bore of the block fitting (e.g. a pipe connected by the pipe connection arrangement). The flange is coupled to the block fitting. The pipe is typically a refrigerant supply pipe and as mentioned above may comprise copper or steel. The pipe comprises an annular collar which is located between the block fitting and the flange and abuts the seal. The seal abuts the plateau portion. In other words, the seal is located between the plateau portion and the collar, and a surface of the seal (e.g. a lower surface) abuts the plateau portion and another surface of the seal (e.g. an upper surface (the surface furthest from the block fitting)) abuts the collar.

A gap may be defined between the surface of the block fitting surrounding the plateau and the flange. When the surface of the block fitting is flat or substantially flat except for the plateau portion, the gap has a dimension substantially equal to a thickness of the seal summed with a thickness of the annular collar and the height of the plateau portion. When the surface is stepped, a gap between the upper portion(s) of the surface of the block fitting facing the flange and the flange has a dimension substantially equal to a thickness of the seal summed with a thickness of the annular collar and the height of the plateau portion, minus the depth of the step. If the depth of the step is greater than or equal to the thickness of the seal summed with a thickness of the annular collar and the height of the plateau, then there will be no gap and the upper portion(s) of the surface of the block fitting will abut the flange.

The block fitting may comprise a body including a block portion and an insert portion. The block portion may be configured to reside above an exterior surface of the heat exchanger, this block portion comprising the surface that faces the flange. The insert portion may be received in the heat exchanger and fluidically coupled thereto. The bore of the block fitting may extend from the surface, through the block portion and through the insert portion to an opening in a lower surface of the insert portion. Thus, the pipe connection arrangement allows fluid to pass through a pipe into or out of the heat exchanger via the opening in the insert portion.

A lower surface of the seal may abut the plateau portion and an upper surface (the surface furthest from the block fitting) may abut the collar.

In one embodiment the block fitting may be integrally formed as part of the heat exchanger. For example, the block fitting may be cast with a portion of the heat exchanger. Alternatively, the block fitting may be formed as a separate element and subsequently attached to the heat exchanger, such as by welding and/or by brazing. Typically, the block fitting and the portion of the heat exchanger to which the block fitting is attached will be formed of the same material, such as aluminium.

The heat exchanger may be a microchannel heat exchanger (MCHE). Optionally, it may be a MCHE of an air cooled chiller. However alternatively the heat exchanger may be an aluminium coil heat exchanger or other type of heat exchanger.

Further, the disclosure extends to an air-cooled chiller comprising at least one heat exchanger in any of the forms described above.

It will be appreciated that in embodiments of the heat exchanger, the pipe connected by the pipe connection arrangement may be considered as part of the heat exchanger or part of the pipe connection arrangement of the heat exchanger.

In another aspect, the present invention provides a method of forming a heat exchanger according to any of the forms described above, the method comprising the steps of: arranging the seal and inserting the pipe into the bore of the block fitting such that the seal is located between and abuts the annular collar of the pipe and the plateau portion of the surface of the block fitting; and arranging the flange over the pipe so that the pipe extends through the bore of the flange and the flange abuts the annular collar of the pipe.

The step of arranging the seal may comprise arranging the seal on the pipe adjacent and/or abutting the annular collar of the pipe prior to inserting the pipe into the bore of the block fitting. It will be appreciated that the seal is arranged adjacent to / abutting a surface of the annular collar of the pipe closest to the heat exchanger to which it is being connected. This may be considered the lower surface of the annular collar. Alternatively, the step of arranging the seal may comprise arranging the seal on the plateau portion prior to inserting the pipe into the bore of the block fitting.

The method may include coupling the flange to the block fitting, optionally using a fastener. The method may include inserting a fastener through the flange and into the block fitting.

It will be appreciated that optional features described in relation to certain embodiments and aspects described above are equally applicable to other embodiments and aspects of the invention.

Certain preferred embodiments of the present disclosure will now be described, by way of example only, with reference to the following drawings, in which:
Figure 1 is a cross-sectional diagram of a conventional pipe connection for an MCHE;
Figure 2 is a cross-sectional diagram of a pipe connection arrangement with a block fitting for a MCHE with a pipe connected therein according to an embodiment of the disclosure;
Figure 3A is a perspective view of the block fitting of the pipe connection arrangement of Figure 2 having a stepped surface comprising a plateau portion;
Figure 3B is a side view of the block fitting of Figure 3A;
Figure 3C is a perspective view of the block fitting of the pipe connection arrangement of Figure 2 having a substantially flat surface comprising a plateau portion;
Figure 3D is a side view of the block fitting of Figure 3C;
Figure 4A is a top view of the block fitting of Figure 3A with a seal arranged thereon;
Figure 4B is a side cross-sectional view of the seal of Figure 2;
Figure 5 is an example of an air-cooled chiller having a group of heat exchanger pairs in which multiple pipe connection arrangements as in Figure 2 are utilised; and
Figure 6 is a diagram of one heat exchanger pair of Figure 5 in which a pipe connection arrangement is utilised.

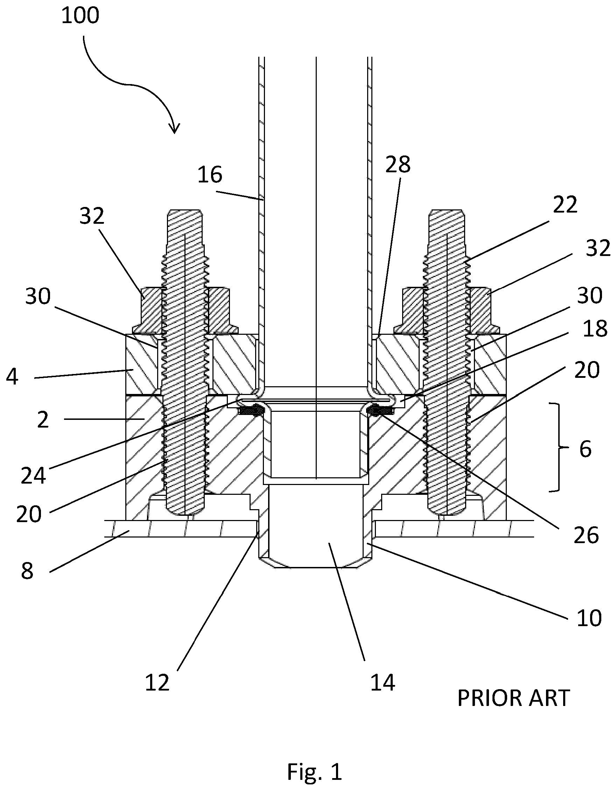

Figure 1 shows a conventional pipe connection 100 which may be an inlet and/or an outlet connection for a MCHE. The pipe connection 100 includes a block fitting 2 and a metal flange 4. The block fitting 2 includes a body having a block portion 6 that resides above the exterior surface of a heat exchanger 8 and an insert portion 10 having an outer diameter that is received in the heat exchanger 8. The outer diameter of the insert portion 10 is sized in correspondence with an opening 12 in the heat exchanger 8.

The block fitting 2 includes a bore 14 which has an opening in and extends from a surface of the block portion 6 that faces the flange 4 when the flange 4 is coupled to the block fitting 2. The bore 14 extends from the surface, through the block fitting 2, to an opening in a lower surface of the insert portion 10. A refrigerant pipe 16 extends partially inside the bore 14. The block fitting 2 thus allows refrigerant to pass through the refrigerant pipe 16 into or out of the heat exchanger 8.

The block fitting 2 is made from aluminium, the refrigerant pipe 16 is a copper tube, and the metal flange 4 is a steel flange.

The surface of the block portion 6 includes a recessed area 18 located between two threaded holes 20. The threaded holes 20 have tapered openings. Each threaded hole 20 receives a bolt 22. The refrigerant pipe 16 includes a pipe collar 24 positioned at a predefined distance from the end of the refrigerant pipe. The refrigerant pipe 16 extends into the bore 14 of the block fitting 2 such that the collar 24 is received in the recessed area 18. A seal 26 is disposed in the recessed area 18 between the block fitting 2 and a lower surface of the collar 24. The seal 26 comprises an annular metallic part arranged concentrically with and radially outward of an annular rubber part.

The metal flange 4 abuts the surface of the block portion 6. The metal flange 4 includes a bore 28 extending therethrough and two holes 30. The metal flange 4 is positioned relative to the block fitting 2 such that the bore 28 of the metal flange 4 aligns with the bore 14 of the block fitting 2, and the holes 30 of the metal flange 4 align with the threaded holes 20 of the block fitting 2. The refrigerant pipe 16 extends through the bore 28 of the metal flange 4 and the bore 14 of the block fitting 2 such that the collar 24 is disposed between the metal flange 4 and the block fitting 2. The metal flange 4 contacts the collar 24 of the refrigerant pipe 16 and applies a force thereto such that the collar 24 compresses the seal 26 between the block portion 6 and the collar 24 to form a leak-proof connection between the refrigerant pipe 16 and the block fitting 2.

Each bolt 22 extends through a hole 30 of the metal flange 4 and a corresponding threaded hole 20 of the block fitting 2. A nut 32 is disposed on each bolt 22 to secure it therein.

The recessed area 18 has a depth sufficient to receive the seal 26 and the collar 24 such that the metal flange 4 seated on the collar 24 abuts the block fitting 2. As described previously, this conventional pipe connection 100 has a problem in that the recessed area 18 can cause water retention which leads to galvanic corrosion between the metallic components, and in particular the aluminium, steel and copper components. Additionally the metallic part of the seal 26 is in contact with the collar of the metallic refrigerant pipe 16 and is positioned close to the metallic block fitting 2 causing further galvanic corrosion.

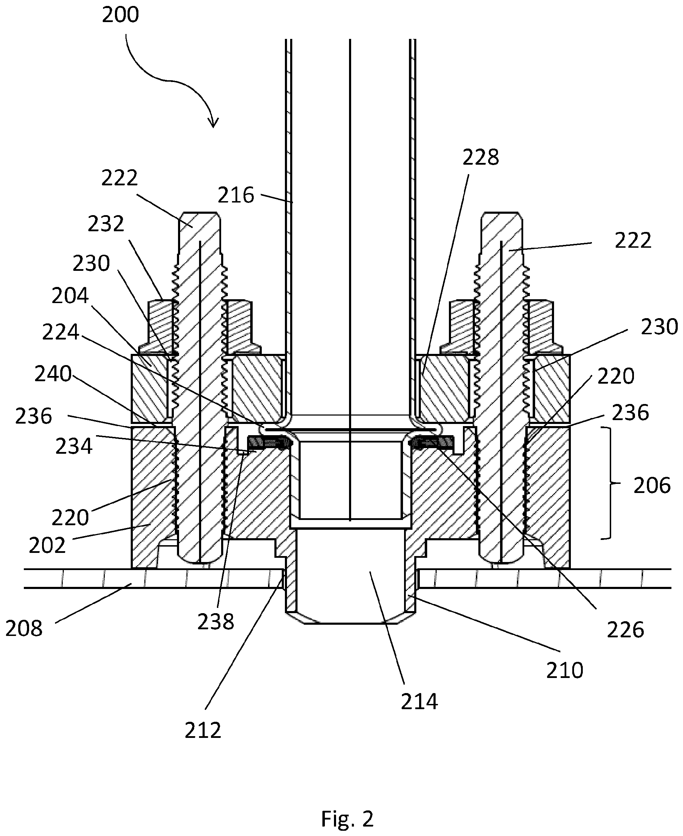

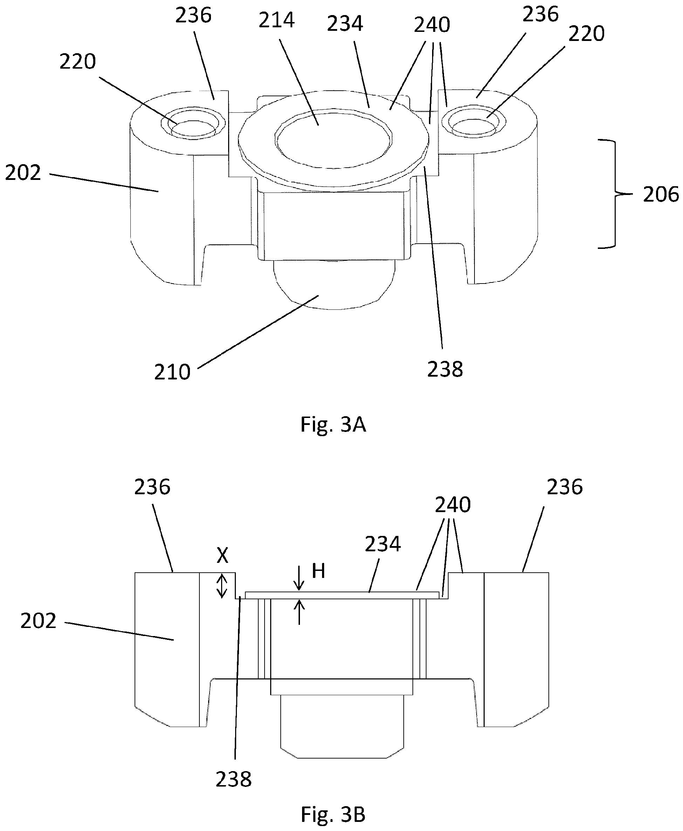

Figure 2 shows a pipe connection arrangement 200 according to an embodiment of the disclosure. The pipe connection arrangement 200 comprises a block fitting 202 and a piping flange, in this case a metal flange, 204. The metal flange 204 has the same structure as metal flange 4. Similarly to block fitting 2, block fitting 202 has a body including a block portion 206 that resides above the exterior surface of a heat exchanger 208 and an insert portion 210 having an outer diameter that is received in the heat exchanger 208. The outer diameter of the insert portion 210 is sized in correspondence with an opening 212 on the heat exchanger 208. Block fitting 202 comprises a bore 214 which has an opening in and extends from a surface 234, 236, 238 of the block portion 206 that faces the flange 204 when the flange 204 is coupled to the block fitting 202. The portions 234, 236, 238 of the surface will be referred to collectively as surface 240, as shown in Figures 3A-3B. The bore 214 extends from the surface 240, through the block fitting, to an opening in a lower surface of the insert portion 210. A refrigerant tube 216 extends partially inside the bore 214. The fitting 202 thus allows refrigerant to pass through the refrigerant tube 216 into or out of the heat exchanger 208.

The block fitting 202 comprises a metallic material, for example aluminium. The refrigerant pipe also comprises a metallic material, for example copper. The metal flange may be a steel flange.

The block portion 206 comprises two threaded holes 220 each configured to receive a bolt 222. The threaded holes 220 have a minor amount of tapering at the openings thereof. This tapering is negligible, such that the portions 236 of the surface may be considered as substantially flat.

The refrigerant pipe 216 includes a pipe collar 224 (also simply termed a "collar" in this specification) positioned at a predefined distance from the end of the refrigerant pipe. The pipe connection arrangement 200 further comprises an annular seal 226 disposed between the fitting 202 and the collar 224. The structure of the seal 226 will be described in more detail below.

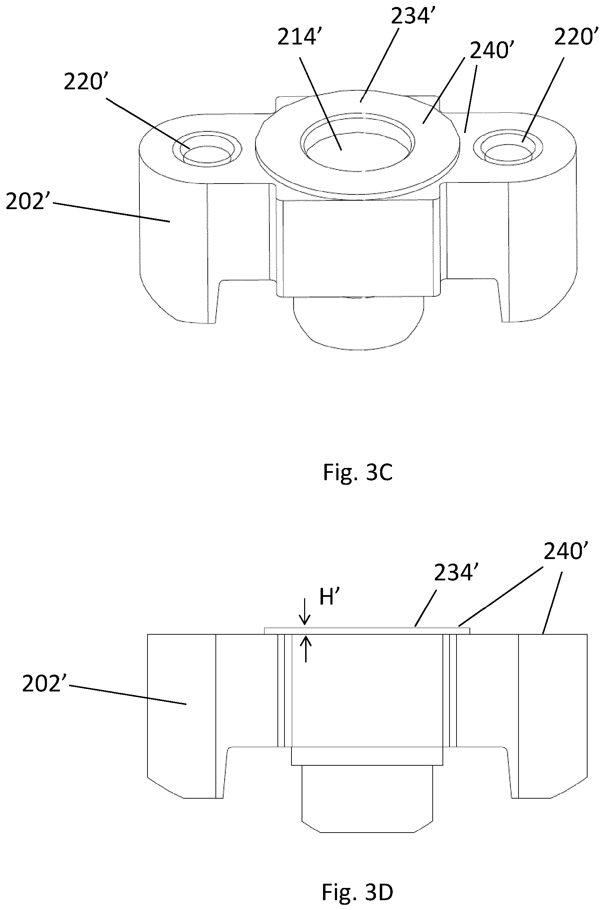

The block fitting 202 has a surface 240 that faces the flange 204. The surface 240 is stepped and comprises two upper portions 236, a lower portion 238 and a plateau portion 234. The upper portions 236 are closer to the flange 204 than the lower portion 238. A step joins each upper portion to the lower portion. The block fitting 202 is shown in more detail in Figure 3 which will be described later.

The block portion 206 differs from block portion 6 in that block portion 206 has the plateau portion 234. The plateau portion 234 projects from the lower portion 238 towards the flange 204. The plateau portion 234 can be seen more clearly in Figures 3A and 3B described below. The seal 226 is seated on the plateau portion 234. The collar is seated on the side of the seal 226 opposite the block fitting 202.

The metal flange 204 abuts the collar 224 on a side opposite to the side that contacts the seal 226. The metal flange 204 includes a bore 228 extending therethrough and two holes 230. The metal flange 204 is positioned relative to the block fitting 202 such that the bore 228 of the metal flange 204 aligns with the bore 214 of the block fitting 202, and the threaded holes 220 of the block fitting 202 align with the holes 230 of the metal flange 204. The bolts 222 extend through the holes 230 of the metal flange 204 and the corresponding threaded holes 220 of the block fitting 202. A nut 232 is disposed on each bolt 222 to secure it therein.

In practice, this means that the method of connecting the refrigerant pipe 216 to the heat exchanger 208 utilising the pipe connection arrangement 200 includes arranging the seal on the pipe such that the seal abuts the annular collar 224 of the pipe. The seal abuts the lower surface of the annular collar of the pipe relative to the heat exchanger 208, i.e. the surface of the annular collar which is closer to the heat exchanger 208. The pipe 216 is then inserted into the bore 214 of the block fitting 202 such that the side of the seal 226 opposite to that which abuts the annular collar is caused to abut the plateau portion 234 of the surface 240 of the block fitting 202. In other words, the seal is located between the plateau portion 234 and the annular collar 224.

Subsequently, the flange 204 is arranged over the pipe 216 so that the pipe extends through the bore 228 of the flange 204 and the flange 204 abuts the collar 224 of the pipe 216. The flange 204 is then coupled to the block fitting 202 by inserting the bolts 222 through the holes 230 in the metal flange 204 and the corresponding holes 220 in the block fitting 202.

Thus, the refrigerant pipe 216 extends through the bore 228 of the metal flange 204 and the bore 214 of the block fitting 202 such that the collar 224 is disposed between the metal flange 204 and the block fitting 202. The metal flange 204 contacts the collar 224 of the refrigerant pipe 216 and applies a force thereto such that the collar 224 compresses the seal 226 between the block fitting 202 and the collar 224 to form a leak-proof connection between the refrigerant pipe 216 and the block fitting 202.

Because the seal 226 is located on the plateau portion 234, the seal 226 and the collar 224 are raised above the lower portion 238 of the surface of the block fitting 202.

In the example shown in Figure 2, the sum of the height of the plateau portion 234, the thickness of the seal 226 and the thickness of the collar 224 are roughly equal to the depth of the step, i.e. the distance between the upper portion 236 and the lower portion 238 of the surface 240. Therefore there is only a negligible gap between the flange 204 and the block fitting 202. In some examples, the sum of the height of the plateau portion 234, the thickness of the seal 226 and the thickness of the collar 224 may be greater than the depth of the step. In this case a gap is defined between the metal flange 204 and the block fitting 202. The gap has a width substantially equal to the sum of the thickness of the seal 226, the thickness of the collar 224 and the height of the plateau portion 234, minus the depth of the step.

Figures 3A and 3B show the block fitting 202 of the pipe connection 200 of Figure 2. As described previously, the block fitting 202 has a block portion 206 and an insert portion 210, a bore 214, and two threaded holes 220 with small tapers at the openings. The bore 214 is configured to receive a refrigerant pipe. The threaded holes 220 are configured to receive bolts. The block fitting 202 comprises the surface 240 that faces the flange when the flange is coupled to the block fitting 202. As described above, the surface 240 of the block fitting 202 in this example is stepped and comprises two upper portions 236, a lower portion 238 and a plateau portion 234. The plateau portion 234 projects from the lower portion 238 of the surface 240. The plateau portion 234 has an annular shape and surrounds the bore 214. As shown in Figure 3B, the plateau portion 234 has a height H and the step has a depth X, i.e. the distance between the upper portions 236 and the lower portion 238 is X. The depth X is greater than the height H in this example.

In another embodiment a surface 240' of a block fitting 202' is flat or substantially flat except for a plateau portion 234', i.e. it does not have a stepped portion. A block fitting 202' according to this example is shown in Figures 3C and 3D. The surface 240' is flat except for the plateau portion 234' (and the negligible tapers at the openings of holes 220'). In other words, the surface 240' comprises a plateau portion 234' and is otherwise substantially flat. When assembled as part of a pipe connection arrangement like the arrangement shown in Figure 2, a gap will be defined between the metal flange 204 and the surface of the block fitting 202' surrounding the plateau 234'. The gap will have a width substantially equal to the sum of the thickness of the seal 226, the thickness of the collar 224 and the height H' of the plateau portion 234'.

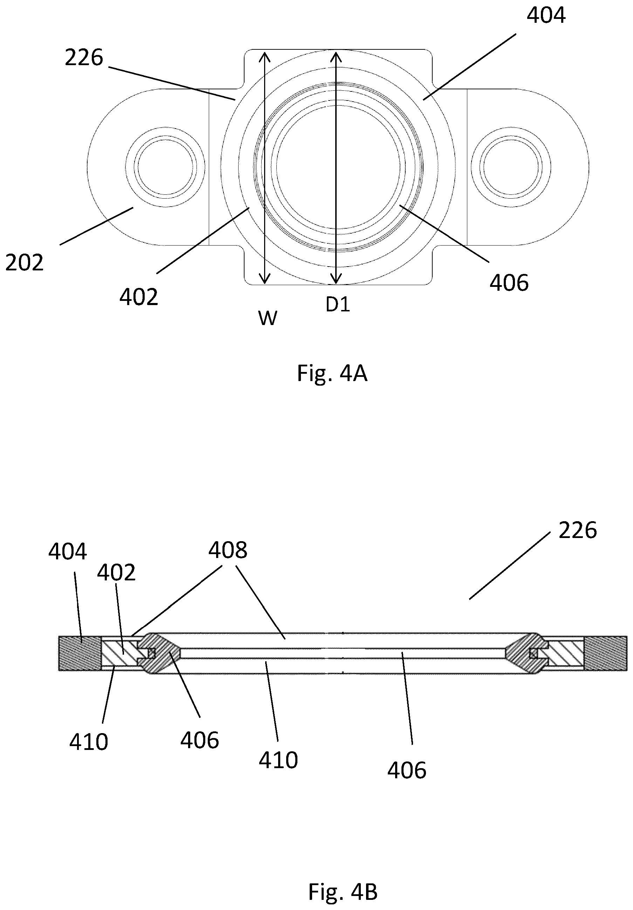

Figures 4A and 4B show examples of the structure of the seal 226 that may be used with embodiments of the pipe connection arrangement of the disclosure. Figure 4A shows a top cross-sectional view of the seal 226 seated on the plateau portion 234 of the surface 240 of the block fitting 202, and Figure 4B shows a side cross-sectional view of the seal 226. In each case, the seal 226 is an annular seal comprising an annular metal ring 402 and an annular electrically insulating part, which is an annular rubber part in this example.

In the example of Figure 4A, the cross-section of the seal 226 shows that the annular rubber part of the seal 226 comprises two annular rubber rings 404, 406. The first annular rubber ring 404 (which may be termed a "rim") is radially outward of the annular metal ring 402 and the second annular rubber ring 406 is radially inward of the annular metal ring 402. The inner diameter of the first annular rubber ring 404 is equal to the outer diameter of the annular metal ring 402, and the inner diameter of the annular metal ring 402 is equal to the outer diameter of the second annular rubber ring 406. Thus the annular metal ring 402 is in contact with the rubber part along its entire inner and outer circumference. The outer diameter D1 of the first annular rubber ring 404 is approximately equal to a width W of the block fitting 202. The inner diameter of the second annular rubber ring 406 is the same or minimally greater than an outer diameter of the refrigerant pipe 216 such that the refrigerant pipe 216 can extend through the annular seal 226 whilst the seal 226 seals around the refrigerant pipe 216.

As shown in Figure 4B, the seal 226 in this example is over-moulded such that the annular metal part 402 is completely encased by rubber. In other words, not only is there rubber around the inner and outer circumference of the metal ring, but also over the top and bottom surfaces of the metal ring. Consequently, the metal ring 402 is entirely encapsulated within rubber. The rubber encapsulation includes the radially outward rubber ring (annular rim) 404, the radially inward rubber ring 406, an upper rubber ring 408 and a lower rubber ring 410.

Referring to Figure 2 and Figures 4A and 4B, the radially outward rubber part 404 of the seal 226 increases a distance between the refrigerant pipe 216 and the block fitting 202. Specifically, there is an increased distance in terms of a gap between the collar 224 and the block fitting 202, i.e. the open pathway between the two is increased. Therefore there is a reduction in galvanic corrosion between the metallic refrigerant pipe 216 and the metallic block fitting 202.

Furthermore, as shown in Figure 4B, because the metallic part 402 of the seal 226 is fully encased by the rubber part 404, 406, 408, 410, there is no direct contact between the metallic part 402 of the seal 226 and the metallic block fitting 202 or between the metallic part 402 of the seal 226 and the metallic refrigerant pipe 216, leading to a reduction in galvanic corrosion between the metallic components.

Additionally, because the seal 226 is located on a plateau portion 234 that projects from the lower portion 238 of the surface 240, the seal is located away from water that may accumulate in the lower portion 238. Additionally, the collar 224 of the pipe 216 that abuts the seal 226 is caused to be located further away from the retained water due to the plateau portion 234. Therefore there is a reduction in galvanic corrosion between the metallic collar 224, flange 204 and the metallic block fitting 202. Thus, damage resulting from such corrosion is reduced.

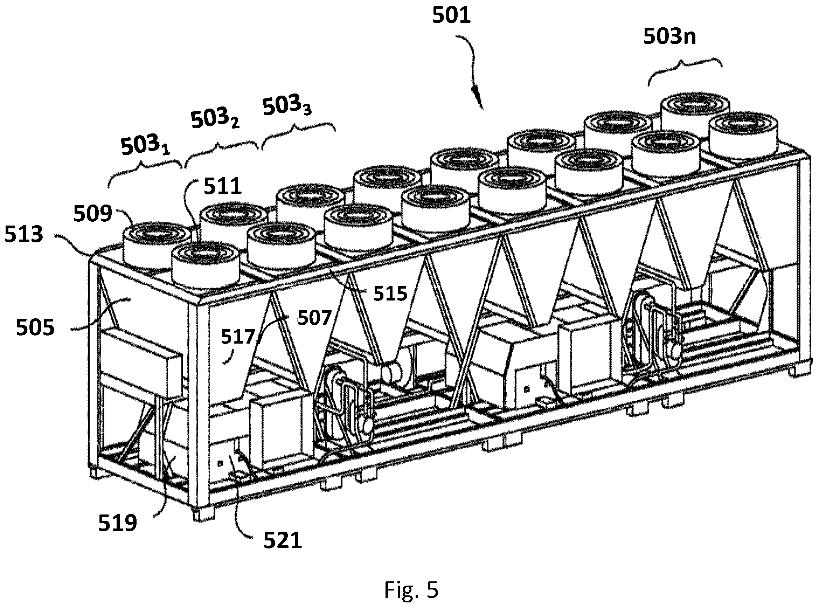

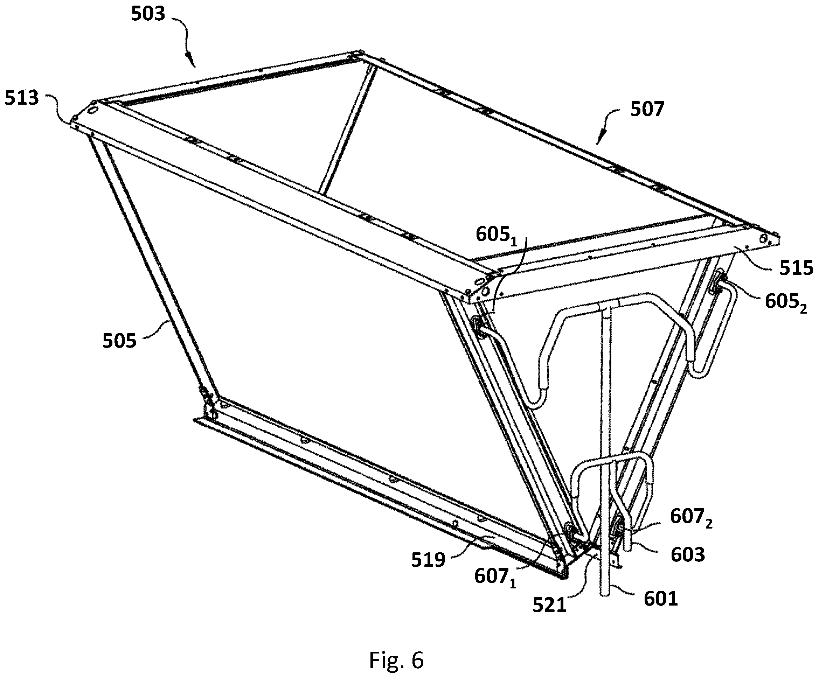

Figure 5 illustrates an air-cooled chiller having a group 501 of heat exchanger pairs 503₁, 503₂, 503₃, ... 503n (collectively 503) operating in parallel, in which pipe connection arrangements according to embodiments of the disclosure may be utilised. A pair 503 of heat exchangers 505 and 507, which may be microchannel heat exchangers (MCHE), are oriented at an acute angle with respect to each other and converge away from two circulation fans 509, 511. The fans 509, 511 are supported by the heat exchangers 505, 507, additional support members 513, 515 and fan motor support brackets (not shown). Solid covers 517 are positioned on the ends and around the circulation fans 509, 511 such that the circulation fans 509, 511 draw air through the exchangers 505, 507. Two drainage channels 519, 521 are provided to collect and guide water run-off from the coils during defrosting cycles. Refrigeration fluid is supplied to the heat exchangers 505, 507 utilising pipe connection arrangements according to embodiments of the disclosure as described in more detail with reference to Figure 6.

Figure 6 shows a heat exchanger pair 503 with the circulation fans 509, 511 and cover 517 removed. Each heat exchanger 505, 507 is coupled to a refrigeration or chiller system by inlet 601 and outlet 603 manifolds. Each inlet 601 and outlet 603 manifold may have several inlet 605₁, 605₂ and outlet 607₁, 607₂ refrigerant pipe connections that couple with a heat exchanger 505, 507. The refrigerant pipe connections each comprise pipe connection arrangement 200 as described above with reference to Figures 2, 3 and 4.

## Claims

1. A heat exchanger (208, 505, 507) comprising a pipe connection arrangement (200) and a pipe connected by the pipe connection arrangement;
wherein the pipe connection arrangement comprises:
a metallic block fitting (202);
a flange (204) coupled to the block fitting; and
a seal (226);
wherein
the block fitting comprises a bore (214) extending therethrough for receiving the pipe (216);
the flange comprises a bore (228) extending therethrough for receiving the pipe;
the pipe extends through the bore of the flange and into the bore of the block fitting, and the bore of the block fitting is fluidically connected with an opening of the heat exchanger, such that fluid may pass through the pipe into or out of the heat exchanger;
the block fitting comprises a surface (240) that faces the flange; and
the pipe comprises an annular collar (224);
**characterised in that**:
the surface comprises a plateau portion (234) surrounding the bore and extending towards the flange; and
the seal is located between the plateau portion and the annular collar (224) of the pipe, wherein one side of the seal abuts the plateau portion and another side of the seal abuts the annular collar.

2. A heat exchanger as claimed in claim 1, wherein the seal comprises a metallic ring (402) and an annular rim (404) of electrically insulating material radially outward of the metallic ring.

3. A heat exchanger as claimed in claim 2, wherein the metallic ring is encapsulated within an electrically insulating material (404, 406, 408, 410), wherein the annular rim is part of the encapsulation or wherein the annular rim is in addition to the encapsulation.

4. A heat exchanger as claimed in claim 2 or 3, wherein the electrically insulating material of the seal is flexible, and/or wherein the electrically insulating material is an elastic material such as an elastic polymer or a rubber material.

5. A heat exchanger as claimed in any preceding claim, wherein the surface of the block fitting comprising the plateau portion is otherwise substantially flat.

6. A heat exchanger as claimed in any preceding claim, wherein the plateau portion has a height of up to 8mm.

7. A heat exchanger as claimed in any preceding claim, wherein the pipe connection arrangement further comprises at least one fastener (222) coupling the flange to the block fitting.

8. A heat exchanger as claimed in claim 7, wherein the fastener comprises a bolt.

9. A heat exchanger as claimed in any preceding claim, wherein the block fitting comprises aluminium, magnesium, bronze, titanium or alloys thereof.

10. A heat exchanger as claimed in any preceding claim, wherein the flange comprises steel, stainless steel or plastic composite.

11. A heat exchanger as claimed in any preceding claim, wherein the heat exchanger is a MCHE, optionally a MCHE of an air cooled chiller.

12. A heat exchanger as claimed in any preceding claim, wherein the block fitting is integrally formed as part of the heat exchanger or wherein the block fitting is formed as a separate element connected to the heat exchanger.

13. A method of forming a heat exchanger (208, 505, 507) as claimed in any preceding claim, the method comprising the steps of:
arranging the seal (226) and inserting the pipe into the bore of the block fitting such that the seal is located between and abuts the annular collar of the pipe and the plateau portion of the surface of the block fitting; and
arranging the flange (204) over the pipe so that the pipe extends through the bore (228) of the flange and the flange abuts the annular collar of the pipe.

14. A method as claimed in claim 13, wherein arranging the seal comprises arranging the seal on the pipe adjacent the annular collar of the pipe prior to inserting the pipe into the bore of the block fitting.

15. A method as claimed in claim 13 or 14, the method further comprising coupling the flange to the block fitting,
optionally comprising inserting a fastener (222) through the flange and into the block fitting.

## Patentansprüche

1. Wärmetauscher (208, 505, 507), umfassend eine Rohrverbindungsanordnung (200) und ein durch die Rohrverbindungsanordnung verbundenes Rohr;
wobei die Rohrverbindungsanordnung Folgendes umfasst:
einen metallischen Blockanschluss (202);
einen Flansch (204), der mit dem Blockanschluss gekoppelt ist;
und
eine Dichtung (226);
wobei
der Blockanschluss eine sich durch ihn erstreckende Bohrung (214) zum Aufnehmen des Rohrs (216) umfasst;
der Flansch eine sich durch ihn erstreckende Bohrung (228) zum Aufnehmen des Rohrs umfasst;
das Rohr sich durch die Bohrung des Flansches und in die Bohrung des Blockanschlusses erstreckt und die Bohrung des Blockanschlusses mit einer Öffnung des Wärmetauschers fluidverbunden ist, derart, dass Fluid durch das Rohr in den Wärmetauscher hinein oder aus ihm heraus fließen kann;
der Blockanschluss eine dem Flansch zugewandte Fläche (240) umfasst; und
das Rohr einen ringförmigen Kragen (224) umfasst;
**dadurch gekennzeichnet, dass**:
die Fläche einen Plateauabschnitt (234) umfasst, der die Bohrung umgibt und sich in Richtung des Flansches erstreckt; und
die Dichtung sich zwischen dem Plateauabschnitt und dem ringförmigen Kragen (224) des Rohrs befindet, wobei eine Seite der Dichtung am Plateauabschnitt anliegt und die andere Seite der Dichtung am ringförmigen Kragen anliegt.

2. Wärmetauscher nach Anspruch 1, wobei die Dichtung einen Metallring (402) und einen ringförmigen Rand (404) aus elektrisch isolierendem Material radial außerhalb des Metallrings umfasst.

3. Wärmetauscher nach Anspruch 2, wobei der Metallring in einem elektrisch isolierenden Material (404, 406, 408, 410) eingekapselt ist, wobei der ringförmige Rand Teil der Einkapselung ist oder wobei der ringförmige Rand zusätzlich zur Einkapselung vorhanden ist.

4. Wärmetauscher nach Anspruch 2 oder 3, wobei das elektrisch isolierende Material der Dichtung flexibel ist und/oder wobei das elektrisch isolierende Material ein elastisches Material wie etwa ein elastisches Polymer oder ein Gummimaterial ist.

5. Wärmetauscher nach einem der vorhergehenden Ansprüche, wobei die Fläche des Blockanschlusses, die den Plateauabschnitt umfasst, ansonsten im Wesentlichen flach ist.

6. Wärmetauscher nach einem der vorhergehenden Ansprüche, wobei der Plateauabschnitt eine Höhe von bis zu 8 mm aufweist.

7. Wärmetauscher nach einem der vorhergehenden Ansprüche, wobei die Rohrverbindungsanordnung ferner mindestens ein Befestigungselement (222) umfasst, das den Flansch mit dem Blockanschluss koppelt.

8. Wärmetauscher nach Anspruch 7, wobei das Befestigungselement eine Schraube umfasst.

9. Wärmetauscher nach einem der vorhergehenden Ansprüche, wobei der Blockanschluss Aluminium, Magnesium, Bronze, Titan oder Legierungen davon umfasst.

10. Wärmetauscher nach einem der vorhergehenden Ansprüche, wobei der Flansch Stahl, Edelstahl oder einen Kunststoffverbundwerkstoff umfasst.

11. Wärmetauscher nach einem der vorhergehenden Ansprüche, wobei der Wärmetauscher ein MCHE ist, optional ein MCHE eines luftgekühlten Kühlaggregats.

12. Wärmetauscher nach einem der vorhergehenden Ansprüche, wobei der Blockanschluss einstückig als Teil des Wärmetauschers gebildet ist oder wobei der Blockanschluss als separates Element gebildet ist, das mit dem Wärmetauscher verbunden ist.

13. Verfahren zum Bilden eines Wärmetauschers (208, 505, 507) nach einem der vorhergehenden Ansprüche, wobei das Verfahren die folgenden Schritte umfasst:
Anordnen der Dichtung (226) und Einführen des Rohrs in die Bohrung des Blockanschlusses derart, dass sich die Dichtung zwischen dem ringförmigen Kragen des Rohrs und dem Plateauabschnitt der Fläche des Blockanschlusses befindet und an diesem anliegt; und
Anordnen des Flansches (204) über dem Rohr, sodass sich das Rohr durch die Bohrung (228) des Flansches erstreckt und der Flansch am ringförmigen Kragen des Rohrs anliegt.

14. Verfahren nach Anspruch 13, wobei das Anordnen der Dichtung Anordnen der Dichtung auf dem Rohr benachbart zum ringförmigen Kragen des Rohrs umfasst, bevor das Rohr in die Bohrung des Blockanschlusses eingeführt wird.

15. Verfahren nach Anspruch 13 oder 14, wobei das Verfahren ferner Koppeln des Flansches mit dem Blockanschluss umfasst,
wobei es optional Einführen eines Befestigungselements (222) durch den Flansch und in den Blockanschluss umfasst.

## Revendications

1. Échangeur de chaleur (208, 505, 507) comprenant un agencement de raccordement de tuyau (200) et un tuyau raccordé par l'agencement de raccordement de tuyau ;
dans lequel l'agencement de raccordement de tuyau comprend :
un raccord de bloc métallique (202) ;
une bride (204) accouplée au raccord de bloc ; et
un joint (226) ;
dans lequel
le raccord de bloc comprend un alésage (214) se prolongeant à travers celui-ci pour recevoir le tuyau (216) ;
la bride comprend un alésage (228) se prolongeant à travers elle pour recevoir le tuyau ;
le tuyau se prolonge à travers l'alésage de la bride et dans l'alésage du raccord de bloc, et l'alésage du raccord de bloc est raccordé fluidiquement à une ouverture de l'échangeur de chaleur, de telle sorte que le fluide peut passer à travers le tuyau dans ou hors de l'échangeur de chaleur ;
le raccord de bloc comprend une surface (240) qui fait face à la bride ; et
le tuyau comprend un collier annulaire (224) ;
**caractérisé en ce que** :
la surface comprend une partie plateau (234) entourant l'alésage et se prolongeant vers la bride ; et
le joint est situé entre la partie plateau et le collier annulaire (224) du tuyau, dans lequel un côté du joint vient en butée contre la partie plateau et un autre côté du joint vient en butée contre le collier annulaire.

2. Échangeur de chaleur selon la revendication 1, dans lequel le joint comprend une bague métallique (402) et un rebord annulaire (404) en matériau électriquement isolant radialement à l'extérieur de la bague métallique.

3. Échangeur de chaleur selon la revendication 2, dans lequel la bague métallique est encapsulée au sein d'un matériau électriquement isolant (404, 406, 408, 410), dans lequel le rebord annulaire fait partie de l'encapsulation ou dans lequel le rebord annulaire s'ajoute à l'encapsulation.

4. Échangeur de chaleur selon la revendication 2 ou 3, dans lequel le matériau électriquement isolant du joint est flexible, et/ou dans lequel le matériau électriquement isolant est un matériau élastique tel qu'un polymère élastique ou un matériau en caoutchouc.

5. Échangeur de chaleur selon une quelconque revendication précédente, dans lequel la surface du raccord de bloc comprenant la partie plateau est par ailleurs sensiblement plate.

6. Échangeur de chaleur selon une quelconque revendication précédente, dans lequel la partie plateau a une hauteur allant jusqu'à 8 mm.

7. Échangeur de chaleur selon une quelconque revendication précédente, dans lequel l'agencement de raccordement de tuyau comprend également au moins un élément de fixation (222) accouplant la bride au raccord de bloc.

8. Échangeur de chaleur selon la revendication 7, dans lequel l'élément de fixation comprend un boulon.

9. Échangeur de chaleur selon une quelconque revendication précédente, dans lequel le raccord de bloc comprend de l'aluminium, du magnésium, du bronze, du titane ou des alliages de ceux-ci.

10. Échangeur de chaleur selon une quelconque revendication précédente, dans lequel la bride comprend de l'acier, de l'acier inoxydable ou un composite plastique.

11. Échangeur de chaleur selon une quelconque revendication précédente, dans lequel l'échangeur de chaleur est un MCHE, éventuellement un MCHE d'un refroidisseur refroidi par air.

12. Échangeur de chaleur selon une quelconque revendication précédente, dans lequel le raccord de bloc est formé d'un seul tenant en tant que partie de l'échangeur de chaleur ou dans lequel le raccord de bloc est formé en tant qu'élément séparé raccordé à l'échangeur de chaleur.

13. Procédé de formation d'un échangeur de chaleur (208, 505, 507) selon une quelconque revendication précédente, le procédé comprenant les étapes consistant à :
agencer le joint (226) et insérer le tuyau dans l'alésage du raccord de bloc de telle sorte que le joint est situé entre et vient en butée contre le collier annulaire du tuyau et la partie plateau de la surface du raccord de bloc ; et
agencer la bride (204) sur le tuyau de sorte que le tuyau se prolonge à travers l'alésage (228) de la bride et la bride vient en butée contre le collier annulaire du tuyau.

14. Procédé selon la revendication 13, dans lequel l'agencement du joint comprend l'agencement du joint sur le tuyau adjacent au collier annulaire du tuyau avant d'insérer le tuyau dans l'alésage du raccord de bloc.

15. Procédé selon la revendication 13 ou 14, le procédé comprenant également l'accouplement de la bride au raccord de bloc,
comprenant éventuellement l'insertion d'un élément de fixation (222) à travers la bride et dans le raccord de bloc.
